# EUROPEAN PATENT SPECIFICATION

(11) **EP 4 365 567 B1**
(45) Date of publication and mention of the grant of the patent: **21.01.2026**
(21) Application number: 23792020.2
(22) Date of filing: 07.03.2023
(51) Int. Cl.: G01N 3/42, H01M 4/04, G01N 19/04

(54) **METHOD FOR PREDICTING OCCURRENCE OF ELECTRODE CRACK AND DELAMINATION**
VERFAHREN ZUR VORHERSAGE DES AUFTRETENS VON ELEKTRODENRISSEN UND DELAMINATION
PROCÉDÉ DE PRÉDICTION D'APPARITION DE FISSURE ET DE DÉLAMINAGE D'ÉLECTRODE

(30) Priority: 19.04.2022 KR 20220047900; 09.02.2023 KR 20230017429
(43) Date of publication of application: 08.05.2024
(73) Proprietor: LG Energy Solution, Ltd., Seoul 07335 (KR)
(72) Inventor: KIM, Ji Hwan, Daejeon 34122 (KR); KWON, Oh Cheol, Daejeon 34122 (KR); CHOI, Soon Sik, Daejeon 34122 (KR); KO, Youngkuk, Daejeon 34122 (KR); LEE, Jeongwon, Daejeon 34122 (KR)
(74) Representative: Goddar, Heinz J.
(86) International application number: PCT/KR2023/003059
(87) International publication number: WO 2023/204440

(56) References cited:
- CN-A- 113 008 638
- JP-A- H08 178 998
- KR-A- 20040 103 208
- KR-A- 20120 033 127
- KR-A- 20190 026 220
- KR-A- 20210 021 915
- US-A1- 2021 057 728
- US-B1- 6 339 958

## Description

### Technical Field

The present invention relates to a method for predicting occurrence of cracks and delamination of an electrode, in particular a method for predicting occurrence of cracks and delamination of an electrode comprising measuring a crack force of the dried electrode and predicting occurrence of cracks and delamination of the electrode based on the measured crack force.

### Background Art

The manufacturing method of electrode for a secondary battery may comprise a mixing process of mixing an active material with a conductive material, a binder, and a solvent to form an electrode slurry, a coating process of applying the electrode slurry to a current collector, a drying process of drying the applied electrode slurry, and a slitting process for cutting the battery to meet the designed battery specifications.

Here, defects such as cracks and delamination may occur due to stress from drying and in the process of slitting the electrode in the manufacturing method of the electrode.

Cracks can occur due to stress from drying. When drying the electrode, there is a difference in the behavior of the thermal contraction or expansion between the foil and the slurry. Therefore, excessive heat is applied to the dried electrode by evaporation of the internal solvent, the electrode may have wrinkles and cracks like cracks on dry land.

Delamination is intended to mean that the electrode at the punched portion in the process of directly punching an electrode through a knife falls like crumbs from the foil.

To prevent the above phenomena, the adhesive force of the electrode slurry is generally measured, but it is difficult to predict 100% of the above defect phenomena using adhesive force. In particular, the adhesive force can be used as an index expressing the attractive force between the foil and the electrode. However, there is a limit to account for the cohesive force (coating cohesive force) between particles in the electrode using the adhesive force, and thus a new index is needed. US 2021/057728 A1 describes a method for quantitatively analyzing cohesive failure of an electrode, including preparing an electrode in which an electrode material mixture layer including an electrode active material, a conductive agent, and a binder is formed on a current collector, measuring shear strength (σ) data according to a cutting depth while cutting the electrode material mixture layer from a surface thereof until reaching the current collector using a surface and interfacial cutting analysis system (SAICAS), obtaining a regression curve of shear strength according to the cutting depth from the shear strength (σ) data, and determining a cutting depth at which the shear strength is minimum in the regression curve, as a location of cohesive failure.

### Detailed Description of the Invention

### Technical Problem

The present invention relates to a method for predicting occurrence of cracks and delamination of an electrode and provides a method for predicting occurrence of cracks and delamination of an electrode comprising measuring a crack force of the dried electrode and predicting occurrence of cracks and delamination of the electrode based on the measured crack force.

The technical problems to be achieved by the present invention are not limited to the above-mentioned technical problems, and other technical problems not mentioned will be clearly understood by those skilled in the art from the description below.

### Solution to Problem

The method for predicting occurrence of cracks and delamination of the electrode of the present invention may comprise:
a step of preparing an electrode to be analyzed of preparing the electrode to be analyzed by applying an electrode slurry on one surface of an electrode current collector and then drying it;
a step of press-fitting the electrode to be analyzed of press-fitting a measuring point having an indenter into the surface of the electrode to be analyzed;
a step of collecting data to be analyzed of collecting indentation load values applied to the measuring point for each indentation depth value of the measuring point for the electrode to be analyzed;
a step of extracting a crack force of extracting an indentation load value at the time that the electrode to be analyzed is broken as a crack force value; and
a prediction step of predicting occurrence of cracks and delamination of the electrode to be analyzed using the crack force value.

### Effect of the Invention

The method for predicting occurrence of cracks and delamination of the electrode according to the present invention can provide data for reducing defects in an electrode manufacturing process by predicting the possibility of occurrence of cracks and delamination of the electrode.

The method for predicting occurrence of cracks and delamination of the electrode according to the present invention can accurately express the characteristics of cohesive force between particles in the electrode.

### Brief Description of Drawings

Fig. 1 is a block diagram showing a method for predicting occurrence of cracks and delamination of an electrode of the present invention.
Fig. 2 is a cross-sectional view showing a cross-section of an electrode to be analyzed prepared in a step of preparing an electrode to be analyzed.
Fig. 3a is a front view showing a measuring point.
Fig. 3b is a side view showing a measuring point.
Fig. 4 is a cross-sectional view showing that a measuring point is press-fitted into the electrode to be analyzed.
Fig. 5 is a graph showing an indentation load as a function of an indentation depth.

### Best Mode for Carrying out the Invention

The method for predicting occurrence of cracks and delamination of the electrode of the present invention may comprise:
a step of preparing an electrode to be analyzed of preparing the electrode to be analyzed by applying an electrode slurry to one surface of an electrode current collector and then drying it;
a step of press-fitting the electrode to be analyzed of press-fitting a measuring point having an indenter into the surface of the electrode to be analyzed;
a step of collecting data to be analyzed of collecting indentation load values applied to the measuring point for each indentation depth value of the measuring point for the electrode to be analyzed;
a step of extracting a crack force of extracting an indentation load value at the time that the electrode to be analyzed is broken as a crack force value; and
a prediction step of predicting occurrence of cracks and delamination of the electrode to be analyzed using the crack force value.

In the step of preparing the electrode to be analyzed of the method for predicting occurrence of cracks and delamination of the electrode of the present invention, the electrode current collector may be made of a metal foil, and the electrode slurry may be prepared by mixing an active material, a conductive agent, a binder, and a solvent.

In the step of press-fitting the electrode to be analyzed of the method for predicting occurrence of cracks and delamination of the electrode of the present invention, one end of the indenter of the measuring point may be an edge formed by the intersection of a first plane and a second plane at an acute angle with each other, and the measuring point may be press-fitted into the electrode to be analyzed while contacting the edge of the measuring point with the one surface of the electrode to be analyzed.

In the method for predicting occurrence of cracks and delamination of the electrode of the present invention, the length of the edge formed by the first plane and the second plane may be 2 mm to 10 mm, and the angle formed by the first plane and the second plane may be 15 degrees to 45 degrees.

In the method for predicting occurrence of cracks and delamination of the electrode of the present invention, the measuring point may move in a direction perpendicular to the one surface of the electrode to be analyzed and be press-fitted into the one surface of the electrode to be analyzed, and the measuring point may move at a speed of 50 µm/s or less.

In the step of extracting a crack force of the method for predicting occurrence of cracks and delamination of the electrode of the present invention, the crack force value may be an indentation load value when the indentation load value has a maximum value with respect to an indentation depth value.

In the prediction step of the method for predicting occurrence of cracks and delamination of the electrode of the present invention, it may be predicted that the smaller the crack force value, the greater the probability of occurrence of cracks or delamination in the electrode to be analyzed.

In the prediction step of the method for predicting occurrence of cracks and delamination of the electrode of the present invention, the indentation depth value when the indentation load value is the crack force value may be considered together with the crack force value in predicting occurrence of cracks or delamination of the electrode to be analyzed.

In the prediction step of the method for predicting occurrence of cracks and delamination of the electrode of the present invention, it may be predicted that the smaller the indentation depth value when the indentation load value is the crack force value, the greater the probability of occurrence of cracks or delamination in the electrode to be analyzed.

In the prediction step of the method for predicting occurrence of cracks and delamination of the electrode of the present invention, the strain energy value may be calculated by integrating the indentation load values up to the indentation depth value when the indentation load value is a crack force value, and the occurrence of cracks and delamination of the electrode to be analyzed may be predicted based on the strain energy value.

In the prediction step of the method for predicting occurrence of cracks and delamination of the electrode of the present invention, it may be predicted that the smaller the strain energy value, the greater the probability of occurrence of cracks or delamination in the electrode to be analyzed.

The method for predicting occurrence of cracks and delamination of the electrode of the present invention may further comprise, prior to the step of preparing the electrode to be analyzed,
a step of preparing a standard electrode of preparing a standard electrode by applying a standard electrode slurry to one surface of an electrode current collector and then drying it;
a step of press-fitting the standard electrode of press-fitting a measuring point into the surface of the standard electrode;
a step of collecting reference data of collecting indentation load values applied to the measuring point for each indentation depth value of the measuring point for the standard electrode; and
a step of extracting a reference force of extracting an indentation load value at the time that the standard electrode is broken as a reference force value;
wherein in the prediction step, the occurrence of cracks and delamination of the electrode to be analyzed may be predicted using the crack force value and the reference force value.

In the prediction step of the method for predicting occurrence of cracks and delamination of the electrode of the present invention, when the crack force value is 70% or less of the reference force value, the electrode to be analyzed may be predicted as an electrode in which cracks and delamination are to occur.

### Mode for Carrying out the Invention

Hereinafter, embodiments according to the present invention will be described in detail with reference to the accompanying drawings. In this process, the size or shape of the components illustrated in the drawings may be exaggerated for clarity and convenience of description. In addition, terms specifically defined in consideration of the configuration and operation of the present invention may vary according to the intention or custom of users or operators. Definitions of these terms should be made based on the contents throughout this specification.

In the description of the present invention, it should be noted that the terms "center", "top", "bottom", "left", "right", "vertical", "horizontal", "inside", "outside", "one surface", "other surface", etc. are based on the orientation or positional relationship shown in the drawings or the orientation or positional relationship normally arranged when using the product of the present invention. It is only for explanation and brief description of the present invention and is not to be construed as limiting the present invention as it does not suggest or imply that the devices or elements indicated must necessarily be configured or operated in a specified orientation.

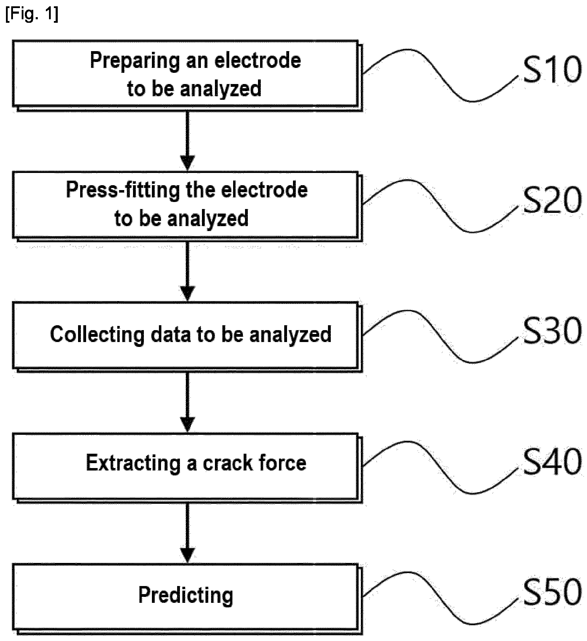

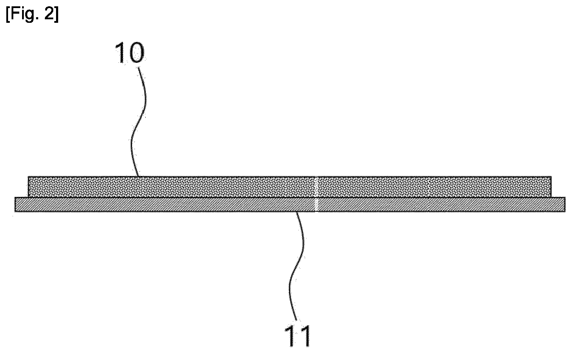

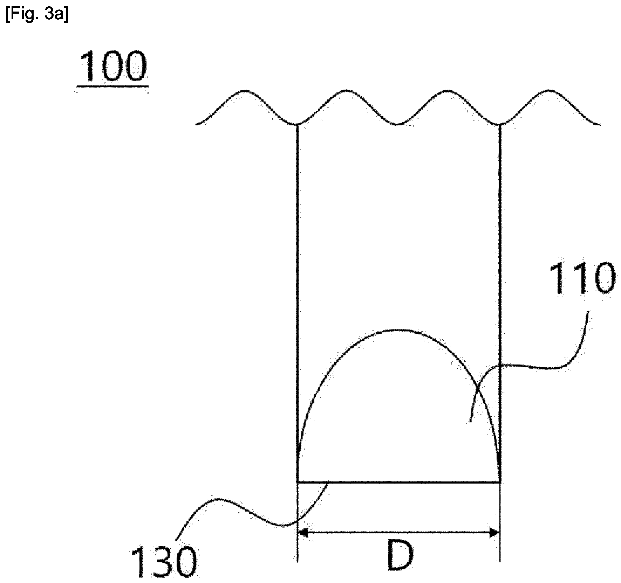

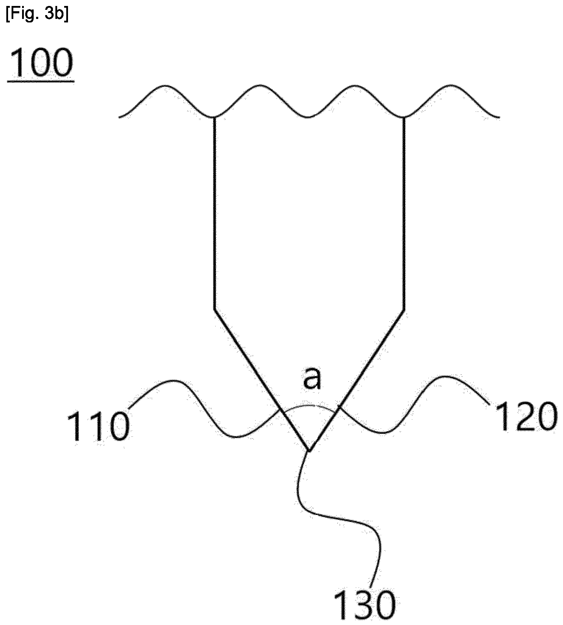

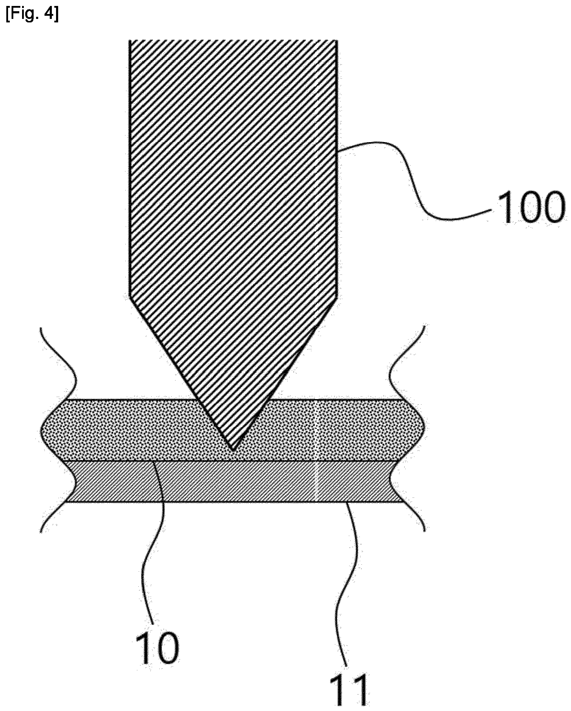

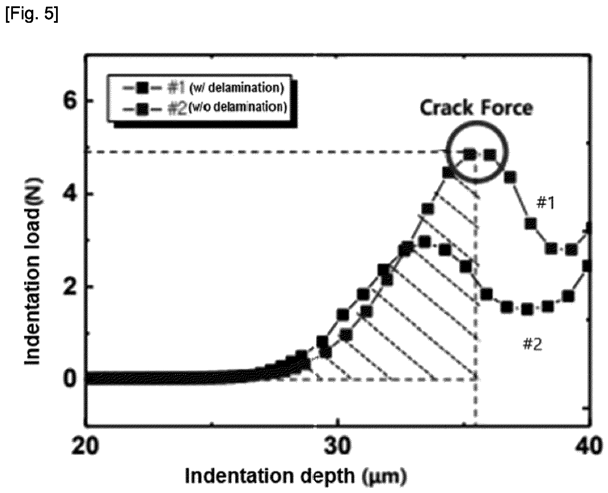

Fig. 1 is a block diagram showing a method for predicting occurrence of cracks and delamination of an electrode of the present invention. Fig. 2 is a cross-sectional view showing a cross-section of an electrode to be analyzed prepared in a step of preparing an electrode to be analyzed. Fig. 3a is a front view showing a measuring point. Fig. 3b is a side view showing a measuring point. Fig. 4 is a cross-sectional view showing that a measuring point is press-fitted into the electrode to be analyzed. Fig. 5 is a graph plotting an indentation load as a function of an indentation depth.

Hereinafter, with reference to Figs. 1 to 5, the method for predicting occurrence of cracks and delamination of the electrode according to the present invention will be described in detail.

The method for predicting occurrence of cracks and delamination of the electrode of the present invention is for predicting the probability of occurrence of cracks or delamination in the electrode in the manufacturing process of the electrode wherein the crack force described later may be used as an index.

As shown in Fig. 1, the method for predicting occurrence of cracks and delamination of the electrode may comprise:
a step of preparing an electrode to be analyzed (S10) of preparing an electrode 10 to be analyzed by applying an electrode slurry to one surface of an electrode current collector 11 and then drying it;
a step of press-fitting the electrode to be analyzed (S20) of press-fitting a measuring point 100 into the surface of the electrode 10 to be analyzed;
a step of collecting data to be analyzed (S30) of collecting indentation load values applied to the measuring point 100 for each indentation depth value of the measuring point 100 for the electrode 10 to be analyzed;
a step of extracting a crack force (S40) of extracting an indentation load value at the time that the electrode 10 to be analyzed is broken as a crack force value; and
a prediction step (S50) of predicting occurrence of cracks and delamination of the electrode 10 to be analyzed using the crack force value.

In the step of preparing the electrode to be analyzed (S10), the electrode current collector 11 may be made of a metal foil, and the electrode slurry may be prepared by mixing an active material, a conductive agent, a binder, and a solvent.

Specifically, in the step of preparing an electrode to be analyzed (S10), the electrode 10 to be analyzed may be prepared by performing steps prior to a slitting process in a general electrode manufacturing process. For example, a mixing process, a coating process of applying the electrode slurry to the current collector, a pressing process of pressing the electrode, and a drying process of drying the applied electrode slurry may be performed to prepare an electrode 10 to be analyzed. The electrode 10 to be analyzed may include, without limitation, a positive electrode and a negative electrode. However, since the positive electrode and the negative electrode have different physical properties from each other, the measurement may be performed under different conditions in the subsequent step of press-fitting the electrode to be analyzed (S20), etc.

As shown in Fig. 2, the electrode 10 to be analyzed may be formed by drying the electrode slurry applied to one surface of the electrode current collector 11.

In the step of press-fitting the electrode to be analyzed (S20), one end of the measuring point 100 is formed as a cusp, and one end of the measuring point 100 formed as the cusp may be inserted into the surface of the electrode by force.

Specifically, as shown in Figs. 3a and 3b, one end of the measuring point 100 may be an edge 130 formed by the intersection of a first plane 110 and a second plane 120 at an acute angle with each other. That is, the cusp of the measuring point 100 may be provided as an edge 130 formed by the intersection of two planes.

The measuring point 100 may be press-fitted into the electrode 10 to be analyzed while contacting the edge 130 of the measuring point 100 with the one surface of the electrode 10 to be analyzed. More specifically, the measuring point 100 and the electrode 10 to be analyzed are aligned so that the direction of the edge 130 of the measuring point 100 is parallel to the one surface of the electrode 10 to be analyzed, the measuring point 100 may move to approach the electrode 10 to be analyzed, and the measuring point 100 may be press-fitted into the electrode 10 to be analyzed.

As shown in Fig. 3a, the length D of the edge 130 formed by the first plane 110 and the second plane 120 may be 2 mm to 10 mm, and as shown in Fig. 3b, an angle a formed by the first plane 110 and the second may be 15 degrees to 45 degrees. The length of the edge 130 and the angle between the two planes are determined in consideration of the material or state of the electrode 10 to be analyzed as sensitivity for detecting the crack force as described below, while inserting the measuring point 100. For example, when the electrode 10 to be analyzed is formed as a negative electrode, the length D of the edge 130 may be 6 mm, and when the electrode 10 to be analyzed is formed as a positive electrode, it may be 3 mm. For example, the angle a formed by the first plane 110 and the second plane 120 may be 32 degrees.

As shown in Fig. 4, the measuring point 100 may move in a direction perpendicular to the one surface of the electrode 10 to be analyzed and be press-fitted into the one surface of the electrode 10 to be analyzed. Specifically, the measuring point 100 may move in a direction perpendicular to the edge 130 of the measuring point 100 and one surface of the electrode 10 to be analyzed and be press-fitted into the electrode 10 to be analyzed. That is, in Fig. 4, the measuring point 100 may move in a vertical direction.

The measuring point 100 may move at a speed of 50 µm/s or less. The measuring point 100 may be press-fitted into one surface of the electrode 10 to be analyzed while moving at a constant speed. Thus, because of the constant speed, the indentation load depends on the state (normal state, rupture state, etc.) of the electrode 10 to be analyzed while press-fitting, and therefore it can be collected and used as analysis data. The speed of the measuring point 100 may be selected within a range where the indentation load is maintained at 20 gf or less for the negative electrode and it may be selected within the range where the indentation load is maintained at 40 gf or less for the positive electrode. For example, the measuring point 100 may move at a speed of 10 µm/s.

In the step of collecting data to be analyzed (S30), a distance the measuring point 100 moves in a direction perpendicular to the one surface of the electrode 10 to be analyzed is defined as an indentation depth. Indentation load values may be collected for the indentation depth that varies while the measuring point 100 moves. The indentation load value may be a load value applied to the measuring point 100 in a direction perpendicular to the one surface of the electrode 10 to be analyzed when the measuring point 100 moves.

As shown in Fig. 5, in the step of extracting a crack force (S40), the crack force value may be an indentation load value when the indentation load value has a maximum value with respect to an indentation depth value. As the measuring point 100 is press-fitted into the electrode, an increasingly larger indentation load is applied to the measuring point 100. At the time that the electrode 10 to be analyzed is completely broken, the indentation load applied to the measuring point 100 is partially released. As shown in Fig. 5, there is a maximum value, which can be determined as a crack force value.

In the prediction step (S50), it may be predicted that the smaller the strain energy value, the greater the probability of occurrence of cracks or delamination in the electrode to be analyzed. In the method for predicting occurrence of cracks and delamination of the electrode of the present invention, the crack force is a value related to the interparticle attraction within the electrode, and the stronger the interparticle attraction, the longer the electrode can withstand the insertion of the measuring point 100, and an electrode having stronger interparticle attraction may have a larger crack force value. Therefore, since cracks or delamination do not easily occur in electrodes having strong interparticle attraction, it may be predicted that the smaller the crack force value, the greater the probability of occurrence of cracks or delamination in the electrode 10 to be analyzed.

In the prediction step (S50), an indentation depth value when an indentation load value is the crack force value may be considered together with the crack force value in predicting occurrence of cracks or delamination of the electrode 10 to be analyzed. As shown in Fig. 5, it can be seen that the electrode with a larger interparticle attraction which does not have delamination has broken at a deeper indentation depth.

Therefore, in the prediction step (S50), it may be predicted that the smaller the indentation depth value when the indentation load value is the crack force value, the greater the probability of occurrence of cracks or delamination in the electrode 10 to be analyzed.

In the prediction step (S50), strain energy value may be calculated by integrating the indentation load values up to the indentation depth value when the indentation load value is a crack force value. The strain energy value may be the area of the hatched region in the graph shown in Fig. 5. In the method for predicting cracks and delamination of the electrode of the present invention, it is possible to predict the occurrence of cracks and delamination of the electrode 10 to be analyzed based on the strain energy value.

Specifically, in the prediction step (S50), it may be predicted that the smaller the strain energy value, the greater the probability of occurrence of cracks or delamination in the electrode 10 to be analyzed.

The method for predicting occurrence of cracks and delamination of the electrode of the present invention may further comprise,
prior to the step of preparing the electrode to be analyzed S10,
a step of preparing a standard electrode of preparing a standard electrode by applying a standard electrode slurry to one surface of an electrode current collector and then drying it;
a step of press-fitting the standard electrode of press-fitting a measuring point into the surface of the standard electrode;
a step of collecting reference data of collecting indentation load values applied to the measuring point for each indentation depth value of the measuring point for the standard electrode; and
a step of extracting a reference force of extracting an indentation load value at the time that the standard electrode is broken as a reference force value.

The standard electrode is a non-defective electrode that does not have the generated cracks or delamination, and the state of the electrode 10 to be analyzed can be determined based on the measured value of the standard electrode.

Specifically, in the prediction step (S50) of the method for predicting occurrence of cracks and delamination of the electrode of the present invention, occurrence of cracks and delamination of the electrode 10 to be analyzed may be predicted using the crack force value and the reference force value.

In the step of preparing a standard electrode, the standard electrode is a non-defective electrode, which does not have the generated delamination. Specifically, the standard electrode may not be separated from the current collector and may have no damage such as cracks when a specific physical condition is applied to the electrode having the determined thickness by completing the roll pressing. For example, an electrode having no separation from a current collector and no damage such as cracks when applying the force which is applied to the electrode during the electrode cutting process, etc., to an electrode under physical conditions, may be used as a standard electrode.

In one embodiment, the standard electrode slurry may be the same as the electrode slurry used to prepare the electrode 10 to be analyzed. The physical properties of the completed electrode can be determined according to manufacturing conditions such as applied thickness, drying time, drying temperature, and pressing strength during the electrode manufacturing process, and the standard electrode slurry is prepared similarly to the electrode slurry of the electrode 10 to be analyzed. However, manufacturing conditions of the standard electrode may be set under different manufacturing conditions from the electrode 10 to be analyzed.

In another embodiment, the standard electrode slurry may have a different composition ratio of a conductive agent, a binder, an active material, and a solvent from that of the electrode slurry for the electrode 10 to be analyzed or have a different composition material itself.

In the prediction step, when the crack force value is 70% or less of the reference force value, the electrode to be analyzed may be predicted as an electrode in which cracks and delamination are to occur.

### Example

Six types of electrode slurries having different binder contents were prepared, and the respective slurries were coated, dried, and pressed to prepare a total of 12 samples of electrodes 10 to be analyzed, with two sets each.

A measuring point 100 having an indenter having a diameter of 3 to 6 pi and an angle a formed by two planes at 30 degrees was press-fitted into the electrode 10 to be analyzed at a speed of 10 µm/s, and a crack force was calculated from the indentation depth and indentation load values measured during press-fitting.

Table 1 below shows crack forces calculated for six types of electrodes A, B, C, A', B', and C'.

**[Table 1]**

| Group | Sample with no delamination | | | Sample with delamination | | |
|---|---|---|---|---|---|---|
| | A | B | C | A' | B' | C' |
| Set 1 | 5.22 | 3.59 | 5.27 | 2.46 | 2.53 | 2.56 |
| Set 2 | 5.62 | 4.81 | 5.71 | 2.91 | 3.04 | 2.73 |

It can be seen that the electrodes of sample group with delamination show a crack force value 30 to 70% lower than that for the electrodes of sample group with no delamination. In Table 1, the crack force is in N.

Although the embodiments according to the present invention have been described above, these are only exemplary, and those skilled in the art will appreciate that various modifications and equivalent embodiments are possible. Therefore, the true technical protection scope of the present invention should be defined by the following claims.

### Description of the Reference Numerals

- 10: Electrode to be analyzed
- 11: Current collector
- 100: Measuring point
- 110: First plane
- 120: Second plane

### Industrial Availability

The method for predicting occurrence of cracks and delamination of the electrode according to the present invention can provide data for reducing defects in an electrode manufacturing process by predicting the possibility of occurrence of cracks and delamination of the electrode.

The method for predicting occurrence of cracks and delamination of the electrode according to the present invention can accurately express the characteristics of cohesive force between particles in the electrode.

## Claims

1. A method for predicting occurrence of cracks and delamination of an electrode (10), comprising:
a step (S10) of preparing an electrode (10) to be analyzed of preparing the electrode (10) to be analyzed by applying an electrode slurry to one surface of an electrode current collector (11) and then drying it;
a step (S20) of press-fitting the electrode (10) to be analyzed of press-fitting a measuring point (100) having an indenter into the surface of the electrode (10) to be analyzed; and
a step (S30) of collecting data to be analyzed of collecting indentation load values applied to the measuring point (100) for each indentation depth value of the measuring point (100) for the electrode (10) to be analyzed, the method being **characterized in that** it further comprises
a step (S40) of extracting a crack force of extracting an indentation load value at the time that the electrode (10) to be analyzed is broken as a crack force value; and
a prediction step (S50) of predicting occurrence of cracks and delamination of the electrode (10) to be analyzed using the crack force value.

2. The method for predicting occurrence of cracks and delamination of the electrode (10) according to claim 1, wherein in the step (S10) of preparing the electrode (10) to be analyzed,
the electrode current collector (11) is made of a metal foil, and
the electrode slurry is prepared by mixing an active material, a conductive agent, a binder, and a solvent.

3. The method for predicting occurrence of cracks and delamination of the electrode (10) according to claim 1, wherein in the step (S20) of press-fitting the electrode (10) to be analyzed,
one end of the indenter of the measuring point (100) is an edge (130) formed by the intersection of a first plane (110) and a second plane (120) at an acute angle with each other, and
the measuring point (100) is press-fitted into the electrode (10) to be analyzed while contacting the edge (130) of the measuring point (100) with the one surface of the electrode (10) to be analyzed.

4. The method for predicting occurrence of cracks and delamination of the electrode (10) according to claim 3, wherein
the length (D) of the edge (130) formed by the first plane (110) and the second plane (120) is 2 mm to 10 mm, and
the angle formed by the first plane (110) and the second plane (120) is 15 degrees to 45 degrees.

5. The method for predicting occurrence of cracks and delamination of the electrode (10) according to claim 4, wherein
the measuring point (100) moves in a direction perpendicular to the one surface of the electrode (10) to be analyzed and is press-fitted into the one surface of the electrode (10) to be analyzed, and
the measuring point (100) moves at a speed of 50 µm/s or less.

6. The method for predicting occurrence of cracks and delamination of the electrode (10) according to claim 1, wherein in the step (S40) of extracting a crack force,
the crack force value is an indentation load value when the indentation load value has a maximum value with respect to an indentation depth value.

7. The method for predicting occurrence of cracks and delamination of the electrode (10) according to claim 1, wherein in the prediction step (S50),
it is predicted that the smaller the crack force value, the greater the probability of occurrence of cracks or delamination in the electrode (10) to be analyzed.

8. The method for predicting occurrence of cracks and delamination of the electrode (10) according to claim 1, wherein in the prediction step (S50),
the indentation depth value when the indentation load value is the crack force value is considered together with the crack force value in predicting occurrence of cracks or delamination of the electrode (10) to be analyzed.

9. The method for predicting occurrence of cracks and delamination of the electrode (10) according to claim 8, wherein in the prediction step (S50),
it is predicted that the smaller the indentation depth value when the indentation load value is the crack force value, the greater the probability of occurrence of cracks or delamination in the electrode (10) to be analyzed.

10. The method for predicting occurrence of cracks and delamination of the electrode (10) according to claim 8, wherein in the prediction step (S50),
the strain energy value is calculated by integrating the indentation load values up to the indentation depth value when the indentation load value is a crack force value, and
the occurrence of cracks and delamination of the electrode (10) to be analyzed is predicted based on the strain energy value.

11. The method for predicting occurrence of cracks and delamination of the electrode (10) according to claim 10, wherein in the prediction step (S50),
it is predicted that the smaller the strain energy value, the greater the probability of occurrence of cracks or delamination in the electrode (10) to be analyzed.

12. The method for predicting occurrence of cracks and delamination of the electrode (10) according to claim 1, wherein, prior to the step (S10) of preparing the electrode (10) to be analyzed, further comprising:
a step of preparing a standard electrode of preparing a standard electrode by applying a standard electrode slurry to one surface of an electrode current collector (11) and then drying it;
a step of press-fitting the standard electrode of press-fitting a measuring point (100) into the surface of the standard electrode;
a step of collecting reference data of collecting indentation load values applied to the measuring point (100) for each indentation depth value of the measuring point (100) for the standard electrode; and
a step of extracting a reference force of extracting an indentation load value at the time that the standard electrode is broken as a reference force value;
wherein in the prediction step, the occurrence of cracks and delamination of the electrode (10) to be analyzed is predicted using the crack force value and the reference force value.

13. The method for predicting occurrence of cracks and delamination of the electrode (10) according to claim 12, wherein in the prediction step (S50),
when the crack force value is 70% or less of the reference force value, the electrode (10) to be analyzed is predicted as an electrode (10) in which cracks and delamination are to occur.

## Patentansprüche

1. Verfahren zum Vorhersagen des Auftretens von Rissen und Delaminierung einer Elektrode (10), umfassend:
einen Schritt (S10) des Vorbereitens einer zu analysierenden Elektrode (10) des Vorbereitens der zu analysierenden Elektrode (10) durch Aufbringen einer Elektrodenpaste auf eine Oberfläche eines Elektrodenstromkollektors (11) und dann Trocknen derselben;
einen Schritt (S20) des Einpressens der zu analysierenden Elektrode (10) des Einpressens eines Messpunkts (100) mit einem Eindringkörper in die Oberfläche der zu analysierenden Elektrode (10); und
einen Schritt (S30) des Sammelns von zu analysierenden Daten des Sammelns von auf den Messpunkt (100) aufgebrachten Eindringlastwerten, für jeden Eindringtiefenwert des Messpunkts (100) für die zu analysierende Elektrode (10);
wobei das Verfahren **dadurch gekennzeichnet ist, dass** es ferner umfasst
einen Schritt (S40) des Extrahierens einer Risskraft des Extrahierens eines Eindringlastwerts zu der Zeit, wenn die zu analysierende Elektrode (10) bricht, als einen Risskraftwert; und
einen Vorhersageschritt (S50) des Vorhersagens des Auftretens von Rissen und Delaminierung der zu analysierenden Elektrode (10) unter Verwendung des Risskraftwerts.

2. Verfahren zum Vorhersagen des Auftretens von Rissen und Delaminierung der Elektrode (10) nach Anspruch 1, wobei in dem Schritt (S10) des Vorbereitens der zu analysierenden Elektrode (10)
der Elektrodenstromkollektor (11) aus einer Metallfolie hergestellt ist, und
die Elektrodenpaste durch Mischen eines aktiven Materials, eines leitfähigen Mittels, eines Bindemittels und eines Lösungsmittels vorbereitet wird.

3. Verfahren zum Vorhersagen des Auftretens von Rissen und Delaminierung der Elektrode (10) nach Anspruch 1, wobei in dem Schritt (S20) des Einpressens der zu analysierenden Elektrode (10)
ein Ende des Eindringkörpers des Messpunkts (100) eine Kante (130) ist, die durch den Schnittpunkt einer ersten Ebene (110) und einer zweiten Ebene (120) in einem spitzen Winkel zueinander gebildet wird, und
der Messpunkt (100) in die zu analysierende Elektrode (10) eingepresst wird, während die Kante (130) des Messpunkts (100) mit der einen Oberfläche der zu analysierenden Elektrode (10) in Kontakt gebracht wird.

4. Verfahren zum Vorhersagen des Auftretens von Rissen und Delaminierung der Elektrode (10) nach Anspruch 3, wobei
die Länge (D) der Kante (130), die durch die erste Ebene (110) und die zweite Ebene (120) gebildet wird, 2 mm bis 10 mm beträgt, und
der Winkel, der durch die erste Ebene (110) und die zweite Ebene (120) gebildet wird, 15 Grad bis 45 Grad beträgt.

5. Verfahren zum Vorhersagen des Auftretens von Rissen und Delaminierung der Elektrode (10) nach Anspruch 4, wobei
der Messpunkt (100) sich in einer Richtung senkrecht zu der einen Oberfläche der zu analysierenden Elektrode (10) bewegt und in die eine Oberfläche der zu analysierenden Elektrode (10) eingepresst wird, und
der Messpunkt (100) sich mit einer Geschwindigkeit von 50 µm/s oder weniger bewegt.

6. Verfahren zum Vorhersagen des Auftretens von Rissen und Delaminierung der Elektrode (10) nach Anspruch 1, wobei in dem Schritt (S40) des Extrahierens einer Risskraft
der Risskraftwert ein Eindringlastwert ist, wenn der Eindringlastwert einen Maximalwert in Bezug auf einen Eindringtiefenwert aufweist.

7. Verfahren zum Vorhersagen des Auftretens von Rissen und Delaminierung der Elektrode (10) nach Anspruch 1, wobei in dem Vorhersageschritt (S50)
vorhergesagt wird, dass die Wahrscheinlichkeit des Auftretens von Rissen oder Delaminierung in der zu analysierenden Elektrode (10) umso größer ist, je kleiner der Risskraftwert ist.

8. Verfahren zum Vorhersagen des Auftretens von Rissen und Delaminierung der Elektrode (10) nach Anspruch 1, wobei in dem Vorhersageschritt (S50)
der Eindringtiefenwert, wenn der Eindringlastwert der Risskraftwert ist, zusammen mit dem Risskraftwert beim Vorhersagen des Auftretens von Rissen oder Delaminierung der zu analysierenden Elektrode (10) berücksichtigt wird.

9. Verfahren zum Vorhersagen des Auftretens von Rissen und Delaminierung der Elektrode (10) nach Anspruch 8, wobei in dem Vorhersageschritt (S50)
vorhergesagt wird, dass die Wahrscheinlichkeit des Auftretens von Rissen oder Delaminierung in der zu analysierenden Elektrode (10) umso größer ist, je kleiner der Eindringtiefenwert ist, wenn der Eindringlastwert der Risskraftwert ist.

10. Verfahren zum Vorhersagen des Auftretens von Rissen und Delaminierung der Elektrode (10) nach Anspruch 8, wobei in dem Vorhersageschritt (S50)
der Verformungsenergiewert durch Integrieren der Eindringlastwerte bis zu dem Eindringtiefenwert berechnet wird, wenn der Eindringlastwert ein Risskraftwert ist, und
das Auftreten von Rissen und Delaminierung der zu analysierenden Elektrode (10) basierend auf dem Verformungsenergiewert vorhergesagt wird.

11. Verfahren zum Vorhersagen des Auftretens von Rissen und Delaminierung der Elektrode (10) nach Anspruch 10, wobei in dem Vorhersageschritt (S50)
vorhergesagt wird, dass die Wahrscheinlichkeit des Auftretens von Rissen oder Delaminierung in der zu analysierenden Elektrode (10) umso größer ist, je kleiner der Verformungsenergiewert ist.

12. Verfahren zum Vorhersagen des Auftretens von Rissen und Delaminierung der Elektrode (10) nach Anspruch 1, wobei es vor dem Schritt (S10) des Vorbereitens der zu analysierenden Elektrode (10) ferner umfasst:
einen Schritt des Vorbereitens einer Standardelektrode des Vorbereitens einer Standardelektrode durch Aufbringen einer Standardelektrodenpaste auf eine Oberfläche eines Elektrodenstromkollektors (11) und dann Trocknen derselben;
einen Schritt des Einpressens der Standardelektrode des Einpressens eines Messpunkts (100) in die Oberfläche der Standardelektrode;
einen Schritt des Sammelns von Referenzdaten des Sammelns von auf den Messpunkt (100) aufgebrachten Eindringlastwerten, für jeden Eindringtiefenwert des Messpunkts (100) für die Standardelektrode; und
einen Schritt des Extrahierens einer Referenzkraft des Extrahierens eines Eindringlastwerts zu der Zeit, wenn die Standardelektrode bricht, als einen Referenzkraftwert;
wobei in dem Vorhersageschritt das Auftreten von Rissen und Delaminierung der zu analysierenden Elektrode (10) unter Verwendung des Risskraftwerts und des Referenzkraftwerts vorhergesagt wird.

13. Verfahren zum Vorhersagen des Auftretens von Rissen und Delaminierung der Elektrode (10) nach Anspruch 12, wobei in dem Vorhersageschritt (S50)
wenn der Risskraftwert 70 % oder weniger des Referenzkraftwerts beträgt, die zu analysierende Elektrode (10) als eine Elektrode (10) vorhergesagt wird, in der Risse und Delaminierung auftreten werden.

## Revendications

1. Procédé de prédiction d'apparition de fissures et de délaminage d'une électrode (10), comprenant :
une étape (S10) de préparation d'une électrode (10) à analyser consistant à préparer l'électrode (10) à analyser en appliquant une suspension d'électrode à l'une des surfaces d'un collecteur de courant d'électrode (11), puis en la séchant ;
une étape (S20) d'ajustement par pression de l'électrode (10) à analyser consistant à ajuster par pression un point de mesure (100) ayant un indenteur dans la surface de l'électrode (10) à analyser ; et
une étape (S30) de collecte de données à analyser consistant à collecter des valeurs de charge d'indentation appliquées au point de mesure (100) pour chaque valeur de profondeur d'indentation du point de mesure (100) pour l'électrode (10) à analyser ;
le procédé étant **caractérisé en ce qu'**il comprend en outre
une étape (S40) d'extraction d'une force de fissuration consistant à extraire une valeur de charge d'indentation au moment où l'électrode (10) à analyser est rompue laquelle est une valeur de force de fissuration ; et
une étape (S50) de prédiction de l'apparition de fissures et de délaminage de l'électrode (10) à analyser en utilisant la valeur de force de fissuration.

2. Procédé de prédiction d'apparition de fissures et de délaminage de l'électrode (10) selon la revendication 1, dans lequel, à l'étape (S10) de préparation l'électrode (10) à analyser,
le collecteur de courant d'électrode (11) est fabriqué en feuille métallique, et
la suspension d'électrode est préparée en mélangeant un matériau actif, un agent conducteur, un liant et un solvant.

3. Procédé de prédiction d'apparition de fissures et de délaminage de l'électrode (10) selon la revendication 1, dans lequel, à l'étape (S20) d'ajustement par pression de l'électrode (10) à analyser,
une extrémité de l'indenteur du point de mesure (100) est un bord (130) formé par l'intersection d'un premier plan (110) et d'un deuxième plan (120) à un angle aigu l'un avec l'autre, et
le point de mesure (100) est ajusté par pression dans l'électrode (10) à analyser tout en étant en contact avec le bord (130) du point de mesure (100) avec l'une des surfaces de l'électrode (10) à analyser.

4. Procédé de prédiction d'apparition de fissures et de délaminage de l'électrode (10) selon la revendication 3, dans lequel
la longueur (D) du bord (130) formée par le premier plan (110) et le deuxième plan (120) est 2 mm à 10 mm, et
l'angle formé par le premier plan (110) et le deuxième plan (120) est 15 degrés à 45 degrés.

5. Procédé de prédiction d'apparition de fissures et de délaminage de l'électrode (10) selon la revendication 4, dans lequel
le point de mesure (100) de déplace dans une direction perpendiculaire à l'une des surfaces de l'électrode (10) à analyser et est ajusté par pression dans l'une des surfaces de l'électrode (10) à analyser, et
le point de mesure (100) de déplace à une vitesse égale ou inférieure à 50 µm/s.

6. Procédé de prédiction d'apparition de fissures et de délaminage de l'électrode (10) selon la revendication 1, dans lequel, à l'étape (S40) d'extraction d'une force de fissuration,
la valeur de force de fissuration est une valeur de charge d'indentation quand la valeur de charge d'indentation a une valeur maximale par rapport à une valeur de profondeur d'indentation.

7. Procédé de prédiction d'apparition de fissures et de délaminage de l'électrode (10) selon la revendication 1, dans lequel, à l'étape de prédiction (S50),
il est prédit que plus la valeur de force de fissuration est faible, plus la probabilité de d'apparition de fissures et de délaminage dans l'électrode (10) à analyser est élevée.

8. Procédé de prédiction d'apparition de fissures et de délaminage de l'électrode (10) selon la revendication 1, dans lequel, à l'étape de prédiction (S50),
la valeur de profondeur d'indentation, quand la valeur de charge d'indentation est la valeur de force de fissuration, est considérée en même temps que la valeur de force de fissuration dans la prédiction de l'apparition de fissures et de délaminage de l'électrode (10) à analyser.

9. Procédé de prédiction d'apparition de fissures et de délaminage de l'électrode (10) selon la revendication 8, dans lequel, à l'étape de prédiction (S50),
il est prédit que plus la valeur de profondeur d'indentation est faible quand la valeur de charge d'indentation est la valeur de force de fissuration, plus la probabilité de d'apparition de fissures et de délaminage dans l'électrode (10) à analyser est élevée.

10. Procédé de prédiction d'apparition de fissures et de délaminage de l'électrode (10) selon la revendication 8, dans lequel, à l'étape de prédiction (S50),
la valeur d'énergie de déformation est calculée en intégrant les valeurs de charge d'indentation jusqu'à la valeur de profondeur d'indentation quand la valeur de charge d'indentation est une valeur de force de fissuration, et
l'apparition de fissures et de délaminage de l'électrode (10) à analyser est prédite sur la base de la valeur d'énergie de déformation.

11. Procédé de prédiction d'apparition de fissures et de délaminage de l'électrode (10) selon la revendication 10, dans lequel, à l'étape de prédiction (S50),
il est prédit que plus la valeur d'énergie de déformation est faible, plus la probabilité d'apparition de fissures et de délaminage dans l'électrode (10) à analyser est élevée.

12. Procédé de prédiction d'apparition de fissures et de délaminage de l'électrode (10) selon la revendication 1, dans lequel, avant l'étape (S10) de préparation de l'électrode (10) à analyser, comprend en outre :
une étape de préparation d'une électrode standard consistant à préparer une électrode standard en appliquant une suspension d'électrode standard à l'une des surfaces d'un collecteur de courant d'électrode (11), puis en la séchant ;
une étape d'ajustement par pression de l'électrode standard consistant à ajuster par pression un point de mesure (100) dans la surface de l'électrode standard ;
une étape de collecte de données de référence consistant à collecter des valeurs de charge d'indentation appliquées au point de mesure (100) pour chaque valeur de profondeur d'indentation du point de mesure (100) pour l'électrode standard ; et
une étape d'extraction d'une force de référence consistant à extraire une valeur de charge d'indentation au moment où l'électrode standard est rompue laquelle est une valeur de force de référence ;
dans lequel, à l'étape de prédiction, l'apparition de fissures et de délaminage de l'électrode (10) à analyser est prédite en utilisant la valeur de force de fissuration et la valeur de force de référence.

13. Procédé de prédiction d'apparition de fissures et de délaminage de l'électrode (10) selon la revendication 12, dans lequel, à l'étape de prédiction (S50),
quand la valeur de force de fissuration est égale ou inférieure à 70% de la valeur de force de référence, l'électrode (10) à analyser est prédite être une électrode (10) dans laquelle des fissures et un délaminage vont apparaître.
